# EUROPÄISCHE PATENTANMELDUNG

(11) **EP 3 399 611 A1**
(43) Veröffentlichungstag der Anmeldung: **07.11.2018**
(21) Anmeldenummer: 17169737.8
(22) Anmeldetag: 05.05.2017
(51) Int. Cl.: H02G 3/08, H02G 15/007

(54) **GERÄTEGEHÄUSE FÜR EIN ELEKTRISCHES GERÄT, SYSTEM MIT EINEM SOLCHEN GERÄTEGEHÄUSE UND VERFAHREN ZUR VERWENDUNG EINES SOLCHEN GERÄTEGEHÄUSES**

(71) Anmelder: Siemens Schweiz AG, 8047 Zürich (CH)
(72) Erfinder: Wattenhofer, Severin, 6343 Buonas (CH); Ito, Hideki, 6318 Walchwil (CH); Schilter, Felix, 6460 Altdorf (CH)
(74) Vertreter: Maier, Daniel Oliver

(57) **Zusammenfassung**

Die Erfindung ist ein Gerätegehäuse (14), welches ein Innengehäuse (16) mit einer Innengehäuseunterschale (20) und einer Innengehäuseoberschale (22) sowie ein Außengehäuse (18) mit einer Außengehäuseunterschale (24) und einer Außengehäuseoberschale (26) umfasst, wobei Profile (30, 34) in der Innengehäuseunterschale (20) und der Innengehäuseoberschale (22) eine Kabeleinführöffnung (30, 34) für ein Kabel (12) bilden, wobei das Innengehäuse (16) einen Klemmkörper (38) hält und mittels des Außengehäuses (18) ein reib- und/oder formschlüssiger Kontakt zwischen dem Klemmkörper (38) und einem an das Gerät (10) herangeführten Kabel (12) bewirkbar ist, sowie ein System mit einem solchen Gerätegehäuse (14) und ein Verfahren zur Verwendung eines solchen Gerätegehäuses (14).

## Beschreibung

Die Erfindung betrifft zuvorderst ein Gerätegehäuse für ein elektrisches Gerät und im Weiteren ein Verfahren zur Verwendung eines solchen Gerätegehäuses sowie ein System mit einem solchen Gerätegehäuse.

Zur Vermeidung einer Übertragung von mechanischen Kräften auf eine Anschlussstelle eines Geräts entlang eines an das Gerät herangeführten Kabels ist oftmals eine Zugentlastung vorgesehen. Mittel zur Zugentlastung sind in unterschiedlichster Form seit langem bekannt. Als Beispiel kann eine sogenannte Kabelschelle genannt werden.

Nachteilig bei bekannten Vorrichtungen zur Zugentlastung ist, dass diese oftmals unhandlich zu bedienen sind.

Eine Aufgabe der Erfindung besteht entsprechend darin, eine weitere Ausführungsform einer Zugentlastung anzugeben, die besonders einfach zu bedienen ist.

Diese Aufgabe wird erfindungsgemäß mittels eines Gerätegehäuses für ein elektrisches Gerät mit den Merkmalen des Anspruchs 1 gelöst. Dazu ist bei einem solchen Gerätegehäuse vorgesehen, dass dieses ein mehrteiliges Gehäuse und zumindest ein Innengehäuse und ein das Innengehäuse umgebendes Außengehäuse aufweist. Das Innengehäuse und das Außengehäuse sind selbst jeweils zumindest zweiteilig. Entsprechend umfassen das Innengehäuse eine Innengehäuseunterschale und eine Innengehäuseoberschale sowie das Außengehäuse eine Außengehäuseunterschale und eine Außengehäuseoberschale. Die Innengehäuseunterschale und die Innengehäuseoberschale bilden zusammen zumindest eine Kabeleinführöffnung für ein an das Gerät heranführbares Kabel. Die oder jede Kabeleinführöffnung umfasst ein Kabelaufnahmeprofil in der Innengehäuseunterschale und ein fluchtendes Kabelabdeckungsprofil in der Innengehäuseoberschale. Das Innengehäuse hält einen zur Fixierung des oder jedes an das Gerät herangeführten Kabels bestimmten Klemmkörper. Dieser wird mittels des Außengehäuses in reib- und/oder formschlüssigen Kontakt mit dem oder jedem derartigen Kabel gebracht. Das Gerätegehäuse zeichnet sich insoweit dadurch aus, dass mittels des Außengehäuses ein reib- und/oder formschlüssiger Kontakt zwischen dem Klemmkörper und einem an das Gerät herangeführten Kabel bewirkbar ist. Dieser reib- und/oder formschlüssige Kontakt zwischen dem Klemmkörper und dem oder jedem an das Gerät herangeführten Kabel bewirkt die Zugentlastung.

Bei einem Verfahren zur Verwendung eines solchen Gerätegehäuses oder eines Gerätegehäuses mit zusätzlichen, grundsätzlich optionalen Merkmalen gemäß der nachfolgenden Beschreibung wird zunächst zum Erhalt des Innengehäuses die Innengehäuseoberschale mit der Innengehäuseunterschale verbunden. Das Verbinden kann zum Beispiel durch eine rastende Verbindung der Innengehäuseoberschale mit der Innengehäuseunterschale und/oder ein Verschrauben der Innengehäuseoberschale mit der Innengehäuseunterschale erfolgen. Das Innengehäuse umschließt eine Schaltung, zum Beispiel eine Schaltung auf einer Leiterplatte, oder dergleichen. Die Schaltung bestimmt die Funktion des Geräts. Einzelne Adern des oder jedes an das Gerät herangeführten Kabels werden an dafür vorgesehene Kontaktstellen angeschlossen, zum Beispiel an Kontaktstellen auf einer Leiterplatte. Das Anschließen erfolgt in grundsätzlich an sich bekannter Art und Weise zum Beispiel durch Löten oder durch Anschließen an eine Klemme oder dergleichen. Je nachdem, ob das Innengehäuse die Schaltung vollständig umgibt oder nicht, erfolgt ein solches Anschließen vor dem Schließen des Innengehäuses oder nach dem Schließen des Innengehäuses. Entsprechend wird das oder jedes jeweilige Kabel vor dem Schließen des Innengehäuses oder nach dem Schließen des Innengehäuses in dem oder einem Kabelaufnahmeprofil der Innengehäuseunterschale platziert bzw. in die oder eine von der Innengehäuseunterschale und der Innengehäuseoberschale gebildete Kabeleinführöffnung ein Kabel eingeführt. Nach dem Verbinden der Innengehäuseoberschale mit der Innengehäuseunterschale wird der Klemmkörper an dem so entstandenen Innengehäuse angebracht und mittels des Außengehäuses wird ein reib- und/oder formschlüssiger Kontakt zwischen dem vom Innengehäuse gehaltenen Klemmkörper und dem oder jedem Kabel bewirkt. Der reib- und/oder formschlüssige Kontakt fixiert das oder jedes Kabel relativ zum Gerätegehäuse und die so bewirkte Fixierung wirkt als Zugentlastung, indem eine außerhalb des Gerätegehäuses auf das Kabel oder ein Kabel ausgeübte Zugkraft auf das Gerätegehäuse, nämlich nur auf das Gerätegehäuse, übertragen wird und damit nicht zu der oder jeder Kontaktstelle im Innern des Gerätegehäuses gelangt.

Für die weitere Beschreibung gilt zur Vermeidung unnötiger Wiederholungen, dass Merkmale und Details, die im Zusammenhang mit dem genannten Verfahren zur Verwendung eines Gerätegehäuses der hier und im Folgenden beschriebenen Art erläutert sind, selbstverständlich auch im Zusammenhang mit und im Hinblick auf das Gerätegehäuse selbst und umgekehrt gelten. Dementsprechend kann das Verfahren auch mittels einzelner oder mehrerer Verfahrensmerkmale fortgebildet sein, die sich auf mit und/oder an dem Gerätegehäuse und dessen Teilen ausführbare Verfahrensschritte beziehen, und das Gerätegehäuse auch durch Mittel zur Ausführung solcher Verfahrensschritte fortgebildet sein. Folglich gelten Merkmale und Details, die im Zusammenhang mit dem genannten Verfahren und eventueller Ausgestaltungen beschrieben sind, selbstverständlich auch im Zusammenhang mit und im Hinblick auf das Gerätegehäuse selbst und jeweils umgekehrt, so dass bezüglich der Offenbarung zu den einzelnen Aspekten der Erfindung stets wechselseitig Bezug genommen wird bzw. werden kann.

Der Vorteil der Erfindung besteht darin, dass bis zum Herstellen des Außengehäuses durch Verbinden der Außengehäuseoberschale mit der Außengehäuseunterschale keine Kräfte aufgrund der Zugentlastung auf das Gerätegehäuse wirken. Das Anschließen des Geräts und speziell auch das Rangieren des oder jedes dabei an das Gerät herangeführten Kabels kann unbeeinflusst von einer ansonsten oftmals notwendigen Vorfixierung des Kabels erfolgen. Dies erleichtert den Anschluss des Geräts. Die Zugentlastung ergibt sich schließlich auf besonders einfache Art und Weise mittels des Außengehäuses, indem dessen zumindest zwei Teile miteinander verbunden werden, insbesondere indem die Außengehäuseoberschale mit der Außengehäuseunterschale verbunden wird.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Gerätegehäuses / des Verfahrens zur Verwendung des gegenständlichen Gerätegehäuses nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Gerätegehäuse auch entsprechend der abhängigen Verfahrensansprüche weitergebildet sein kann und umgekehrt.

Bei einer Ausführungsform des Gerätegehäuses ist dieses so ausgestaltet, dass ein Rahmen der Innengehäuseoberschale einen Bereich auf einem Rand der Innengehäuseunterschale, nämlich den Bereich mit dem oder jedem Kabelaufnahmeprofil, umgibt. Das Innengehäuse hält den Klemmkörper dann mittels des Rahmens der Innengehäuseoberschale und des Rands der Innengehäuseunterschale. Hier kann der Klemmkörper besonders einfach platziert werden. Der Rahmen bildet eine Aufnahme für den Klemmkörper, in welche dieser eingesetzt wird. Der Rahmen hält den eingesetzten Klemmkörper in Position, bis mittels des Außengehäuses der als Zugentlastung wirkende reib- und/oder formschlüssige Kontakt mit dem oder jedem an das Gerät herangeführten Kabel hergestellt wird.

Bei einer weiteren Ausführungsform des Gerätegehäuses umfasst der Rahmen einen einstückig mit der Innengehäuseoberschale verbundenen Kragen. Dies erleichtert die Herstellung. Eine solche Innengehäuseoberschale mit einem davon ausgehenden Rahmen kann zum Beispiel als Spritzgießteil, insbesondere Kunststoffspritzgießteil, in einem Spritzgießverfahren hergestellt werden.

Bei einer nochmals weiteren Ausführungsform des Gerätegehäuses weist der Rahmen, insbesondere dessen Kragen, fluchtend mit dem oder jedem Kabelabdeckungsprofil der Innengehäuseoberschale eine entsprechende, zum Kabelabdeckungsprofil gehörende Ausnehmung auf. Die bei einem in den Rahmen eingesetzten Klemmkörper zum Klemmkörper weisende Innenseite des Rahmens weist damit eine maximal große Oberfläche auf. Der Klemmkörper kann sich daran anlegen und bei einem auf ein Kabel ausgeübten Zug nimmt diese Oberfläche die Zugkraft auf.

Bei einer Ausführungsform des Gerätegehäuses weist dieses mehrere Kabeleinführöffnungen auf, wobei mittels genau eines Klemmkörpers mehrere in jeweils eine Kabeleinführöffnung eingeführte Kabel fixierbar sind. Zum Erhalt einer Zugentlastung für mehrere Kabel muss folglich nur genau ein Klemmkörper angebracht werden. Auch dies erleichtert den Anschluss des Geräts enorm.

Bei einer besonderen Ausführungsform des Gerätegehäuses wird ein Klemmkörper aus einem elastisch komprimierbaren Material verwendet, wobei der Klemmkörper mittels des Außengehäuses komprimierbar und beim Komprimieren der reibschlüssige Kontakt zwischen dem Klemmkörper und dem oder jedem an das Gerät herangeführten Kabel bewirkbar ist. Mittels eines solchen elastisch komprimierbaren Klemmkörpers ist eine besonders belastbare reibschlüssige Verbindung zwischen dem Klemmkörper und dem oder jedem Kabel herstellbar. Durch das Maß der Komprimierbarkeit des Klemmkörpers kann die mittels des Reibschlusses bewirkte Haltekraft eingestellt werden.

Bei einer zusätzlichen oder alternativen Ausführungsform des Gerätegehäuses wird ein Klemmkörper verwendet, der auf seiner der Ober- oder Mantelfläche eines an das Gerät herangeführten Kabels zugewandten "Unterseite" ein als Klinge fungierendes Form- und/oder Reibschlussprofil aufweist. Mittels des Außengehäuses wird ein solches im Folgenden kurz als Klinge bezeichnetes Form- und/oder Reibschlussprofil des Klemmkörpers in die Kabeloberfläche oder bei mehreren Kabeln in deren Oberflächen gepresst, wobei das oder jedes Kabel komprimiert wird, so dass sich zumindest ein formschlüssiger Kontakt, regelmässig ein form- und reibschlüssiger Kontakt, zwischen dem Klemmkörper und dem oder jedem an das Gerät herangeführten Kabel ergibt.

Bei einer optionalen Ausführungsform des Gerätegehäuses ist das Komprimieren des Klemmkörpers und/oder das Komprimieren des oder jedes Kabels mittels einer Auflagefläche der Außengehäuseoberschale bewirkbar, welche beim Verbinden der Außengehäuseoberschale mit der Außengehäuseunterschale in Kontakt mit einer freien Fläche eines in dem Rahmen gehaltenen Klemmkörpers kommt. Mittels einer solchen Auflagefläche kann besonders effizient ein Druck auf den Klemmkörper ausgeübt werden und der ausgeübte Druck verteilt sich gleichmäßig auf den Klemmkörper und wird gleichmäßig in diesen und das oder jedes Kabel eingeleitet.

Die Erfindung ist auch ein System mit einem Gerätegehäuse der hier und im Folgenden beschriebenen Art und mit einem mit dem Gerätegehäuse verwendbaren Klemmkörper, wobei der Klemmkörper eine Anzahl von Klemmkörperausnehmungen und Klemmkörperblindabdeckungen aufweist. Die Anzahl der Klemmkörperausnehmungen und Klemmkörperblindabdeckungen ergibt sich aufgrund der Anzahl der an das Gerät heranzuführenden Kabel sowie der Anzahl der Kabeleinführöffnungen des Gerätegehäuses. Der Klemmkörper umfasst für jedes an das Gerät heranzuführende oder an das Gerät angeschlossene Kabel eine Klemmkörperausnehmung und für jede frei bleibende Kabeleinführöffnung eine Klemmkörperblindabdeckung. Zusammen mit einem solchen Klemmkörper bildet das Gerätegehäuse eine Klemm- und Dichteinheit zur Fixierung des oder jedes Kabels (Leitungsfixierung) und zur Abdichtung im Bereich einer Kabeleinführung bei einem elektrischen Gerät.

Bei einer besonderen Ausführungsform eines solchen Systems umfasst dieses eine Mehrzahl von Klemmkörpern mit einer jeweils unterschiedlichen Anzahl von Klemmkörperausnehmungen und Klemmkörperblindabdeckungen und/oder Klemmkörperausnehmungen und Klemmkörperblindabdeckungen an unterschiedlichen Stellen. Aus der Mehrzahl der Klemmkörper kann dann jeweils ein für den jeweiligen Anwendungsfall passender oder ein für den jeweiligen Anwendungsfall am besten passender Klemmkörper ausgewählt und zusammen mit dem Gerätegehäuse verwendet werden, zum Beispiel indem der Klemmkörper im Rahmen einer besonderen Ausführungsform des eingangs genannten Verfahrens am Innengehäuse angebracht wird, indem dieser in den Rahmen der Innengehäuseoberschale eingesetzt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen.

Es zeigen
- FIG 1: ein Gerätegehäuse eines elektrischen Geräts,
- FIG 2: das Gerätegehäuse gemäß FIG 1 in einer Explosionsdarstellung, wobei erkennbar ist, dass das Gerätegehäuse zweiteilig ist und ein Innengehäuse mit einer Innengehäuseunterschale und einer Innengehäuseoberschale sowie ein Außengehäuse mit einer Außengehäuseunterschale und einer Außengehäuseoberschale umfasst,
- FIG 3: bis
- FIG 9: Momentaufnahmen beim Zusammensetzen des Gerätegehäuses und beim Anschließen eines Kabels an das elektrische Gerät,
- FIG 10: die Außengehäuseoberschale des Gerätegehäuses und
- FIG 11: einen Schnitt durch das Gerätegehäuse gemäß FIG 1 für die in FIG 8 und FIG 9 gezeigten Konfigurationen.

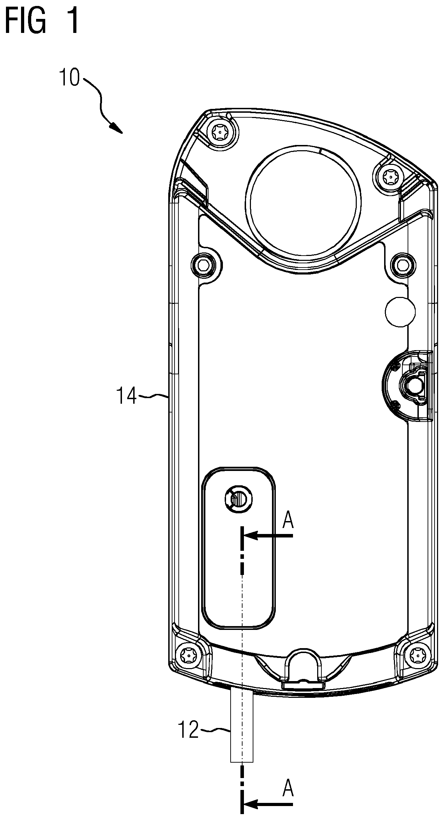

Die Darstellung in FIG 1 zeigt in einer Draufsicht ein elektrisches Gerät 10. Das gezeigte elektrische Gerät 10 fungiert als Stellantrieb für Lüftungsklappen. Dies ist allerdings nur ein Beispiel. Die hier vorgeschlagene Neuerung ist unabhängig von der Funktion des jeweiligen Geräts 10. An das Gerät 10 ist zumindest ein Kabel 12 angeschlossen. Dieses fungiert zum Beispiel als Zuleitung zur Zuführung elektrischer Energie an das Gerät 10. Zusätzlich oder alternativ können mittels des Kabels 12 oder eines weiteren Kabels 12 oder weiterer Kabel 12 dem Gerät 10 in grundsätzlich an sich bekannter Art und Weise Daten oder Signale übermittelt werden oder von dem Gerät 10 generierte Daten und/oder Signale an andere Geräte 10, Sensoren und/oder Aktoren in einem technischen Prozess und/oder eine oder mehrere übergeordnete Einheiten übermittelt werden.

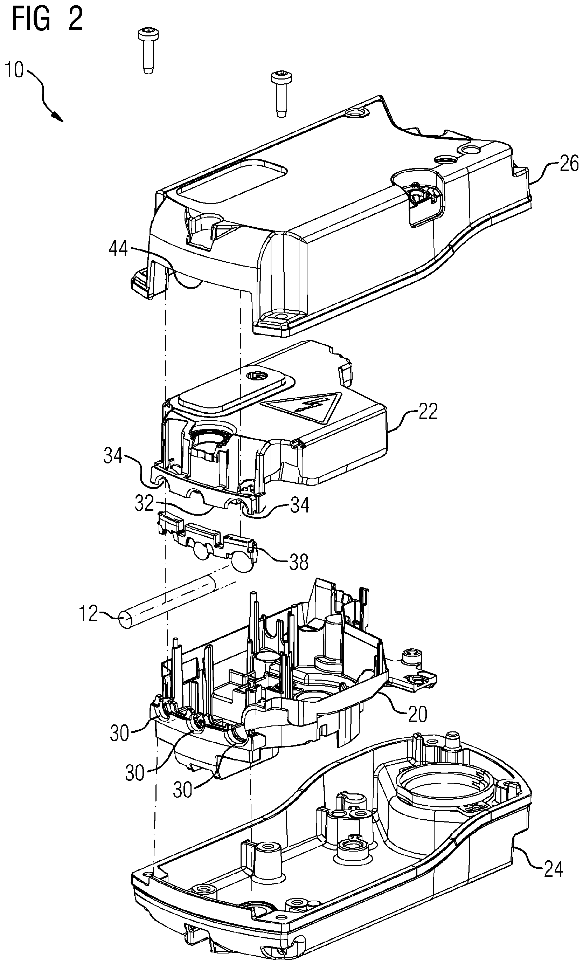

Das Gerät 10 umfasst ein mehrteiliges Gerätegehäuse 14. Die Teile des Gerätegehäuses 14 sind in der Darstellung in FIG 2 gezeigt.

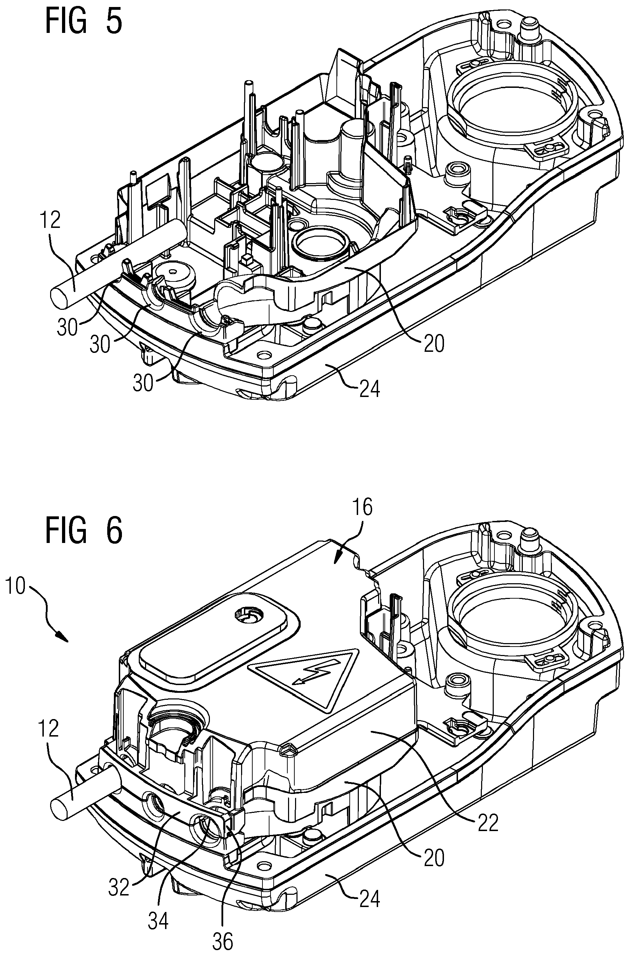

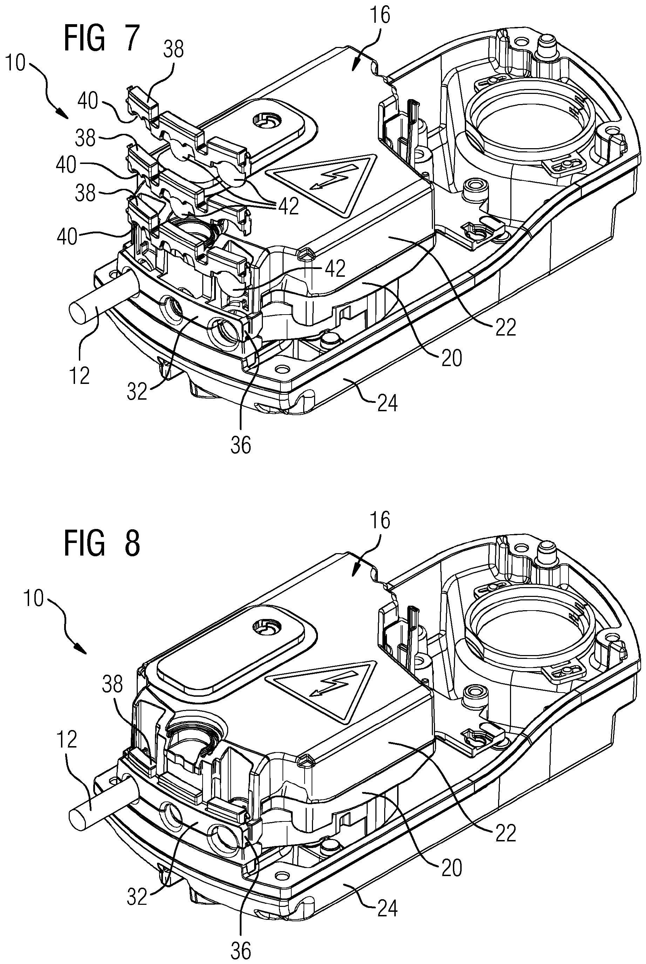

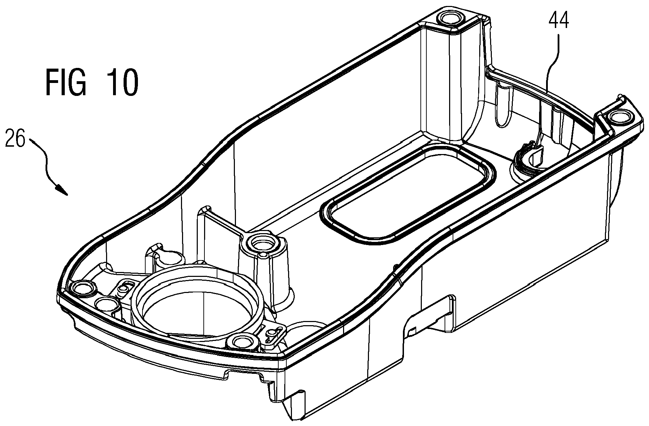

Die Darstellung in FIG 2 ist eine Explosionsdarstellung des Geräts 10 gemäß FIG 1, allerdings ohne eine Schaltung, Leiterplatte oder dergleichen im Innern des Gerätegehäuses 14. Das Gerätegehäuse 14 umfasst ein Innengehäuse 16 und ein Außengehäuse 18. Das Innengehäuse 16 ist besonders gut in der Darstellung in FIG 6 und FIG 8 erkennbar. Das Außengehäuse 18 ist in der Darstellung in FIG 1 und ansonsten vor allem in der Darstellung in FIG 10 sichtbar. Das Innengehäuse 16 und das Außengehäuse 18 sind selbst mehrteilig ausgeführt. Bei der dargestellten Ausführungsform umfasst das Innengehäuse 16 eine Unterschale und eine Oberschale (Innengehäuseunterschale 20; Innengehäuseoberschale 22). Bei der dargestellten Ausführungsform umfasst ebenso das Außengehäuse 18 eine Unterschale und eine Oberschale (Außengehäuseunterschale 24; Außengehäuse-oberschale 26).

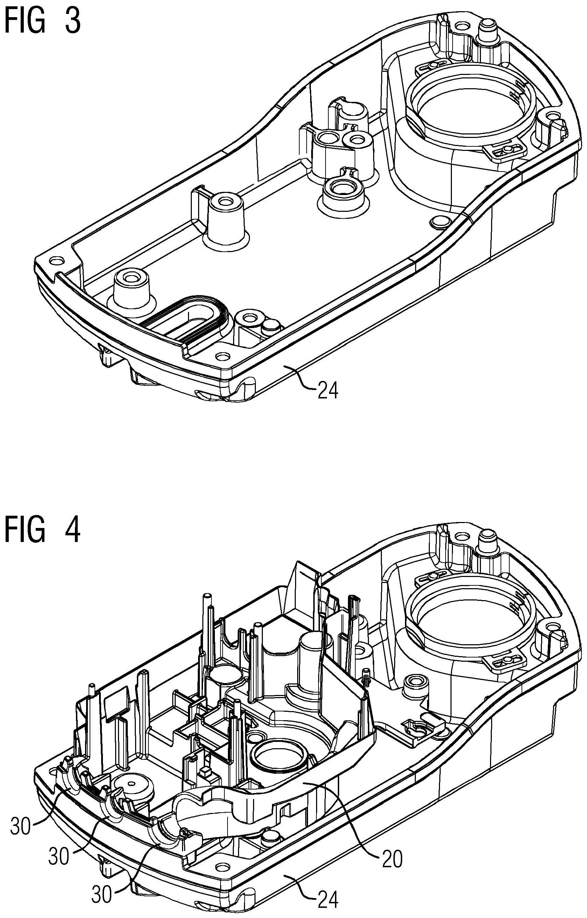

Die Darstellungen in FIG 3 bis FIG 10 zeigen den Ablauf einer Leitungsfixierung und Abdichtung im Bereich einer Kabeleinführung bei einem elektrischen Gerät 10 gemäß dem hier vorgeschlagenen Ansatz. In den Darstellungen in FIG 3 bis FIG 10 ist jeweils nur der Teil des Gerätegehäuses 14 und der davon umfassten Gehäuseteile 20, 22; 24, 26 gezeigt, der an der Leitungsfixierung und Abdichtung beteiligt ist.

Die Darstellung in FIG 3 zeigt zunächst nur einen Abschnitt (Anschlussseite) der Außengehäuseunterschale 24. In oder auf dieser wird die Innengehäuseunterschale 20 platziert und die Darstellung in FIG 4 zeigt die Außengehäuseunterschale 24 zusammen mit der Innengehäuseunterschale 20. Die Innengehäuseunterschale 20 weist zumindest ein Kabelaufnahmeprofil 30 auf. Als Kabelaufnahmeprofil 30 fungiert eine halbkreisförmige oder im Wesentlichen halbkreisförmige Ausnehmung in einem zur Anschlussseite gewandten Rand der Innengehäuseunterschale 20. Beim gezeigten Ausführungsbeispiel sind nebeneinander drei Kabelaufnahmeprofile 30 vorgesehen. Bei mehr als einem Kabelaufnahmeprofil 30 können unterschiedliche Kabelaufnahmeprofile 30 zum Beispiel für unterschiedliche Kabelquerschnitte vorgesehen sein.

Die Darstellung in FIG 5 zeigt eine Momentaufnahme beim Einlegen eines Abschnitts eines Kabels 12 in ein Kabelaufnahmeprofil 30.

In der Darstellung in FIG 6 ist die Innengehäuseoberschale 22 auf die Innengehäuseunterschale 20 aufgesetzt. In dem damit gebildeten Innengehäuse 16 befindet sich - zum Beispiel auf einer Leiterplatte - eine die Funktion des Geräts 10 bestimmende Schaltung (nicht gezeigt). Zumindest einzelne Adern des Kabels 12 sind in grundsätzlich an sich bekannter Art und Weise an Kontaktstellen (nicht gezeigt) der Schaltung angeschlossen. Die Innengehäuseoberschale 22 weist auf der Anschlussseite einen Kragen 32 auf, der zumindest abschnittsweise auf der Randfläche mit dem oder jedem Kabelaufnahmeprofil 30 aufliegt. Zusammen mit dem Abschnitt der Innengehäuseoberschale 22, von dem der Kragen 32 ausgeht, begrenzt der Kragen 32 einen Abschnitt auf der besagten Randfläche der Innengehäuseunterschale 20 (so wie ein Zaun ein Grundstück umschließt).

Im Folgenden werden im Interesse einer besseren Lesbarkeit der weiteren Beschreibung der Kragen 32 und der Abschnitt der Innengehäuseoberschale 22, von dem dieser ausgeht, zusammen als Rahmen 36 bezeichnet, denn beide zusammen grenzen einen Flächenabschnitt auf dem Rand der Innengehäuseunterschale 20 und zusammen mit dem Rand der Innengehäuseunterschale 20 ein auf einer Seite (bei den Darstellungen nach "oben") offenes Volumen ein. Der Kragen 32 ist optional einstückig mit der Innengehäuseoberschale 22 verbunden und ist zum Beispiel das Ergebnis eines Spritzformprozesses beim Herstellen der Innengehäuseoberschale 22.

Die Innengehäuseoberschale 22 weist optional - wie beim gezeigten Ausführungsbeispiel - in dem Kragen 32 und in dem Abschnitt der Innengehäuseoberschale 22, von dem dieser ausgeht, fluchtend mit dem oder jedem Kabelaufnahmeprofil 30 ein Kabelabdeckungsprofil 34 auf. Bei dem oder jedem Kabelabdeckungsprofil 34 handelt es sich ebenfalls - wie bei dem Kabelaufnahmeprofil 30 - um eine insbesondere halbkreisförmige Ausnehmung in dem zur Anschlussseite gewandten Rand der Innen-gehäuseoberschale 22 und - dazu fluchtend - in dem Kragen 32 der Innengehäuseoberschale 22. Ein in ein Kabelaufnahmeprofil 30 der Innengehäuseunterschale 20 eingelegtes Kabel 12 wird nach dem Kombinieren der Innengehäuseoberschale 22 mit der Innengehäuseunterschale 20 durch das Kabelaufnahmeprofil 30 ("von unten") und das Kabelabdeckungsprofil 34 ("von oben") gehalten und ist damit bereits anfänglich fixiert, nämlich quer zur Längsachse des Kabels 12 in diesem Bereich fixiert. Jeweils ein Kabelaufnahmeprofil 30 der Innengehäuseunterschale 20 und ein Kabelabdeckungsprofil 34 der Innengehäuseoberschale 22 bilden zusammen eine Kabeleinführöffnung 30, 34 des Geräts 10. In eine solche Öffnung kann ein Kabel 12 auch eingeführt werden, wenn die Innengehäuseoberschale 22 bereits auf die Innengehäuseunterschale 20 aufgesetzt ist. Die insoweit in den Darstellungen in FIG 5 und FIG 6 gezeigte Reihenfolge stellt folglich keine zwingende Reihenfolge dar. Vielmehr kann das in FIG 6 gezeigte, in einer der Kabeleinführöffnungen 30, 34 befindliche Kabel 12 in axialer Richtung in die Kabeleinführöffnung 30, 34 eingeführt worden sein.

Die Darstellung in FIG 7 zeigt mehrere Klemmkörper 38, von denen einer in den mit dem Kragen 32 gebildeten Rahmen 36 eingesetzt wird. Der Rahmen 36 schließt einen eingesetzten Klemmkörper 38 formschlüssig oder zumindest im Wesentlichen formschlüssig ein. Ein in den Rahmen 36 eingesetzter Klemmkörper 38 liegt zumindest mit einem Abschnitt auf der Oberfläche des mittels des Kabelaufnahmeprofils 30 und des Kabelabdeckungsprofil 34 initial fixierten Kabels 12 auf.

Der Klemmkörper 38 weist optional im Bereich des Kabelaufnahmeprofils 30 oder eines Kabelaufnahmeprofils 30 eine konkave Ausnehmung (Klemmkörperausnehmung 40) auf, insbesondere eine zu einem jeweiligen Kabelabdeckungsprofil 34 passende Ausnehmung. Zusätzlich oder alternativ weist der Klemmkörper 38 bei einem mehrere Kabeleinführöffnungen 30, 34 aufweisenden Innengehäuse 16 zumindest einen als Blindabdeckung fungierenden konvexen Vorsprung (Klemmkörperblindabdeckung 42) auf. Unterschiedliche Klemmkörper 38 mit Ausnehmungen 40 und/oder Vorsprüngen 42 an unterschiedlichen Positionen entlang der größten Längsachse des Klemmkörpers 38 sind für unterschiedliche Anschlusssituationen vorgesehen. Wenn bei einem Innengehäuse 16 mit - wie bei der dargestellten Ausführungsform - drei Kabeleinführöffnungen 30, 34 eine Kabeleinführöffnung durch ein Kabel 12 belegt ist und die anderen beiden Kabeleinführöffnungen 30, 34 frei bleiben, wird ein dazu passender Klemmkörper 38 verwendet, nämlich ein Klemmkörper 38 mit einer Ausnehmung 40 im Bereich der verwendeten Kabeleinführöffnung 30, 34 und Vorsprüngen 42 im Bereich der nicht verwendeten Kabeleinführöffnungen 30, 34. Eine Auswahl von Klemmkörpern 38 kann einem Gerät 10 beiliegen.

Die Darstellung in FIG 8 zeigt einen in den Rahmen 36 eingesetzten Klemmkörper 38. Der Klemmkörper 38 ist auf vier Seiten von dem Rahmen 36 eingeschlossen. Der Rahmen 36 hält den Klemmkörper 38 also in Position. Der Klemmkörper 38 liegt aber auf der Oberfläche des Kabels 12 nur auf und liegt ansonsten auf dem durch den Rahmen 36 begrenzten Abschnitt des Rands der Innengehäuseunterschale 20 auf, insbesondere mit dem oder jedem Vorsprung 42 auf der Oberfläche jeweils eines Kabelaufnahmeprofils 30.

In der Darstellung in FIG 8 ist erkennbar, dass der in den Rahmen 36 eingesetzte Klemmkörper 38 über den Rand des Rahmens 36 hinausragt. Zur reibschlüssigen Fixierung des oder jedes durch eine Kabeleinführöffnung 30, 34 an das Gerät 10 herangeführten Kabels 12 ist der Klemmkörper 38 komprimierbar. Im komprimierten Zustand ergibt sich eine reduzierte Höhe des Klemmkörpers 38, zum Beispiel eine derart reduzierte Höhe, dass die bei der Darstellung in FIG 8 noch über den Rand des Rahmens 36 hinausragende Oberkante des Klemmkörpers 38 mit der Oberkante des Rahmens 36 fluchtet. Ein solcher Klemmkörper 38 ist aus einem komprimierbaren Werkstoff, zum Beispiel einem komprimierbaren Kunststoff, insbesondere einem thermoplastischen Elastomer, hergestellt. Zur formschlüssigen Fixierung des oder jedes durch eine Kabeleinführöffnung 30, 34 an das Gerät 10 herangeführten Kabels 12 wird der Klemmkörper 38 teilweise in die oder jede Kabeloberfläche gepresst. Dabei wird das oder jedes Kabel 12 komprimiert, zum Beispiel so weit, dass die bei der Darstellung in FIG 8 noch über den Rand des Rahmens 36 hinausragende Oberkante des Klemmkörpers 38 mit der Oberkante des Rahmens 36 fluchtet.

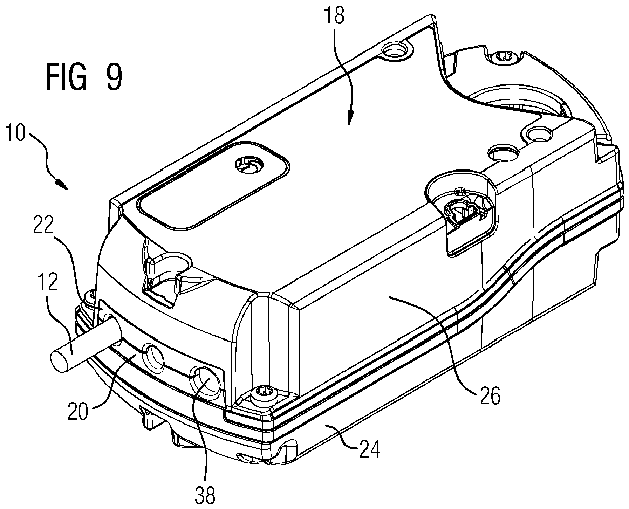

Die Darstellung in FIG 9 zeigt das Gerät 10 gemäß FIG 1 mit angebrachter Außengehäuseoberschale 26. Die Außengehäuseoberschale 26 wird dabei mit der Außengehäuseunterschale 24 zum Beispiel an den mittels der Blockpfeile gekennzeichneten Stellen verschraubt. Entsprechende Schrauben sind in der Explosionsdarstellung in FIG 2 gezeigt. Die Außengehäuseunterschale 24 und die Außengehäuseoberschale 26 lassen einen Bereich mit der zumindest einen Kabeleinführöffnung 30, 34 frei. In der Darstellung in FIG 9 sind insoweit die dortigen Teile der Innengehäuseunterschale 20 und -oberschale 22 erkennbar, wobei der von der Innengehäuseoberschale 22 erkennbare Abschnitt Teil des den Klemmkörper 38 haltenden Rahmens 36 ist. Durch die bei der gezeigten Situation freibleibenden Kabeleinführöffnungen 30, 34 hindurch ist der Klemmkörper 38 erkennbar.

Der Klemmkörper 38 wird mittels der Außengehäuseoberschale 26 auf die Außenoberfläche des oder jedes durch eine Kabeleinführöffnung 30, 34 an das Gerät 10 herangeführten Kabels 12 gepresst. Dafür weist die Außengehäuseoberschale 26 eine Auflagefläche 44 (FIG 1) auf.

Die Darstellung in FIG 10 zeigt die Außengehäuseoberschale 26 alleine mit einer Blickrichtung in das Innere der Außengehäuseoberschale 26. Dabei ist die Auflagefläche 44 am Rand der Außengehäuseoberschale 26 erkennbar.

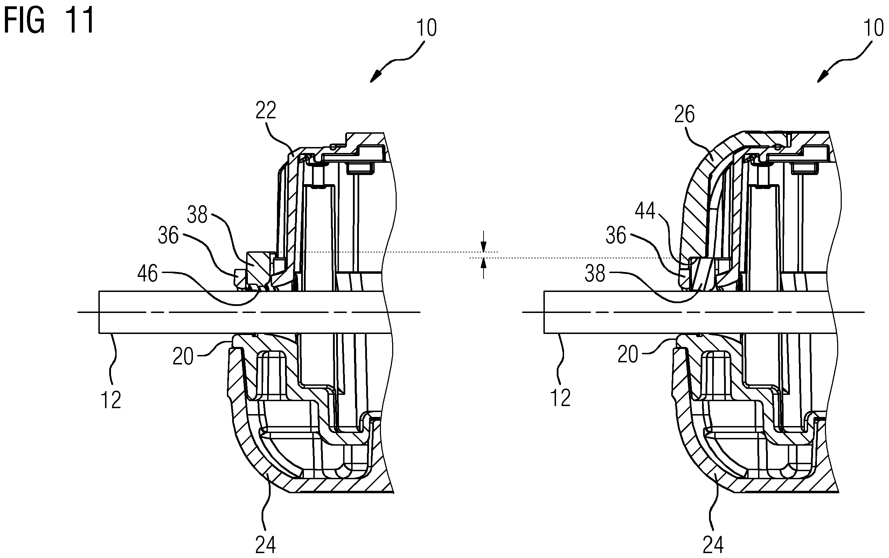

Die Auflagefläche 44 ist außerdem in der Darstellung in FIG 11 zu erkennen. FIG 11 zeigt das Gerät 10 im Schnitt entlang der in FIG 1 gezeigten Schnittlinie A-A und zwar zum einen (links) ohne Außengehäuseoberschale 26 und zum anderen (rechts) mit aufgesetzter Außengehäuseoberschale 26. Die Darstellung auf der linken Seite entspricht also der Konfiguration wie in FIG 8 und die Darstellung auf der rechten Seite entspricht der Konfiguration wie in FIG 9.

Bei aufgesetzter Außengehäuseoberschale 26 liegt deren Auflagefläche 44 auf der zuvor freien Oberfläche des Klemmkörpers 38 auf. Beim Verbinden der Außengehäuseoberschale 26 mit der Außengehäuseunterschale 24 wird der Klemmkörper 38 komprimiert und/oder ein kurz als Klinge 46 bezeichnetes Form- und/oder Reibschlussprofil des Klemmkörpers 38 in die Kabeloberfläche gedrückt und dabei das Kabel 12 komprimiert. Dies ist in der Darstellung in FIG 11 durch den Vergleich der unbelasteten Höhe des Klemmkörpers 38 (links) mit der belasteten/komprimierten Höhe (rechts) besonders herausgestellt. Aufgrund der Belastung des Klemmkörpers 38 drückt dieser auf die Außenoberfläche des oder jedes durch jeweils eine Kabeleinführöffnung 30, 34 an das Gerät 10 herangeführten Kabels 12. Das oder jedes Kabel 12 ist mittels des sich auf diese Weise ergebenden Reib- und /oder Formschlusses in axialer Richtung fixiert. Diese Fixierung wirkt als Zugentlastung, derart, dass ein außerhalb des Geräts 10 auf das Kabel 12 oder ein Kabel 12 ausgeübter Zug sich nicht auf die Kontaktstellen im Innern des Geräts 10 auswirkt.

Die mittels des Reib- und/oder Formschlusses bewirkte Haltekraft ist zum Beispiel durch eine Verwendung unterschiedlich hoher Klemmkörper 38 und/oder unterschiedlich tiefer Form- und/oder Reibschlussprofile 46 einstellbar. Die Höhe eines Klemmkörpers 38 bestimmt, wie weit dieser über den oberen Rand des Rahmens 36 hinausragt, und damit, wie weit dieser beim Verbinden der Außengehäuseoberschale 26 mit der Außengehäuseunterschale 24 komprimiert wird und/oder wie weit das Kabel 12 mittels des Klemmkörpers 38 komprimiert wird. Bei einem komprimierbaren Klemmkörper 38 führt bei gleichen Materialien des Klemmkörpers 38 eine stärkere Kompression zu einer größeren Haltekraft. Selbstverständlich kann die Haltekraft auch durch eine Auswahl des jeweiligen Materials für den Klemmkörper 38 beeinflusst werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird zuvorderst ein Gerätegehäuse 14, welches ein Innengehäuse 16 mit einer Innengehäuseunterschale 20 und einer Innengehäuseoberschale 22 sowie ein Außengehäuse 18 mit einer Außengehäuseunterschale 24 und einer Außengehäuseoberschale 26 umfasst, wobei Profile 30, 34 in der Innengehäuseunterschale 20 und der Innengehäuseoberschale 22 eine Kabeleinführöffnung 30, 34 für ein Kabel 12 bilden, wobei das Innengehäuse 16 einen Klemmkörper 38 hält und mittels des Außengehäuses 18 ein reib- und/oder formschlüssiger Kontakt zwischen dem Klemmkörper 38 und einem an das Gerät 10 herangeführten Kabel 12 bewirkbar ist. Darüber hinaus werden ein System mit einem solchen Gerätegehäuse 14 und ein Verfahren zur Verwendung eines solchen Gerätegehäuses 14 angegeben.

### Bezugszeichenliste

- 10: (elektrisches) Gerät
- 12: Kabel
- 14: Gerätegehäuse
- 16: Innengehäuse
- 18: Außengehäuse
- 20: Innengehäuseunterschale
- 22: Innengehäuseoberschale
- 24: Außengehäuseunterschale
- 26: Außengehäuseoberschale
- 28: (frei)
- 30: Kabelaufnahmeprofil
- 32: Kragen
- 34: Kabelabdeckungsprofil
- 36: Rahmen
- 38: Klemmkörper
- 40: Klemmkörperausnehmung
- 42: Klemmkörperblindabdeckung
- 44: Auflagefläche
- 46: Klinge, Form- und/oder Reibschlussprofil

## Patentansprüche

1. Gerätegehäuse (14) für ein elektrisches Gerät (10),
wobei das Gerätegehäuse (14) ein Innengehäuse (16) mit einer Innengehäuseunterschale (20) und einer Innengehäuseoberschale (22) sowie ein Außengehäuse (18) mit einer Außengehäuseunterschale (24) und einer Außengehäuseoberschale (26) umfasst,
wobei zumindest ein Kabelaufnahmeprofil (30) in der Innengehäuseunterschale (20) und ein fluchtendes Kabelabdeckungsprofil (34) in der Innengehäuseoberschale (22) eine Kabeleinführöffnung (30, 34) für ein an das Gerät (10) heranführbares Kabel (12) bilden,
wobei das Innengehäuse (16) einen Klemmkörper (38) hält und
wobei mittels des Außengehäuses (18) ein reib- und/oder formschlüssiger Kontakt zwischen dem Klemmkörper (38) und einem an das Gerät (10) herangeführten Kabel (12) bewirkbar ist.

2. Gerätegehäuse (14) nach Anspruch 1,
wobei ein Rahmen (36) der Innengehäuseoberschale (22) einen Bereich auf einem Rand der Innengehäuseunterschale (20) mit dem oder jedem Kabelaufnahmeprofil (30) umgibt und
wobei das Innengehäuse (16) den Klemmkörper (38) mittels des Rahmens (36) der Innengehäuseoberschale (22) und des Rands der Innengehäuseunterschale (20) hält.

3. Gerätegehäuse (14) nach Anspruch 2,
wobei der Rahmen (36) einen einstückig mit der Innengehäuseoberschale (22) verbundenen Kragen (32) umfasst.

4. Gerätegehäuse (14) nach Anspruch 2 oder 3,
wobei der Rahmen (36) fluchtend mit dem oder jedem Kabelabdeckungsprofil (34) der Innengehäuseoberschale (22) eine entsprechende, zum Kabelabdeckungsprofil (34) gehörende Ausnehmung aufweist.

5. Gerätegehäuse (14) nach einem der vorangehenden Ansprüche,
mit mehreren Kabeleinführöffnungen (30, 34), wobei mittels genau eines Klemmkörpers (38) mehrere in jeweils eine Kabeleinführöffnung (30, 34) eingeführte Kabel (12) fixierbar sind.

6. Gerätegehäuse (14) nach einem der vorangehenden Ansprüche,
mit einem Klemmkörper (38) aus einem elastisch komprimierbaren Material,
wobei der Klemmkörper (38) mittels des Außengehäuses (18) komprimierbar und beim Komprimieren der reibschlüssige Kontakt zwischen dem Klemmkörper (38) und dem oder jedem an das Gerät (10) herangeführten Kabel (12) bewirkbar ist.

7. Gerätegehäuse (14) nach einem der vorangehenden Ansprüche,
mit einem der Oberfläche eines an das Gerät (10) herangeführten Kabels (12) zugewandten Form- und/oder Reibschlussprofil (46),
wobei mittels des Außengehäuses (18) das Form- und/oder Reibschlussprofil (46) des Klemmkörpers (38) in die Kabeloberfläche gepresst und der form- und/oder reibschlüssige Kontakt zwischen dem Klemmkörper (38) und dem oder jedem an das Gerät (10) herangeführten Kabel (12) bewirkbar ist.

8. Gerätegehäuse (14) nach Anspruch 6 oder 7,
wobei das Komprimieren des Klemmkörpers (38) bzw. das Einpressen des Form- und/oder Reibschlussprofils (46) des Klemmkörpers (38) mittels einer Auflagefläche (44) der Außengehäuseoberschale (26) bewirkbar ist, welche beim Verbinden der Außengehäuseoberschale (26) mit der Außengehäuseunterschale (24) in Kontakt mit einer freien Fläche eines in dem Rahmen (36) gehaltenen Klemmkörpers (38) kommt.

9. System mit einem Gerätegehäuse (14) nach einem der vorangehenden Ansprüche und einem mit dem Gerätegehäuse (14) verwendbaren Klemmkörper (38),
wobei der Klemmkörper (38) eine der Anzahl der an das Gerät (10) heranzuführenden Kabel (12) entsprechende Anzahl von Klemmkörperausnehmungen (40) sowie eine der Anzahl der Kabeleinführöffnungen (30, 34) des Gerätegehäuses (14) abzüglich der an das Gerät (10) heranzuführenden Kabel (12) entsprechende Anzahl von Klemmkörperblindabdeckungen (42) aufweist.

10. System nach Anspruch 9, mit einer Mehrzahl von Klemmkörpern (38) mit einer jeweils unterschiedlichen Anzahl von Klemmkörperausnehmungen (40) und Klemmkörperblindabdeckungen (42) und/oder Klemmkörperausnehmungen (40) und Klemmkörperblindabdeckungen (42) an unterschiedlichen Stellen.

11. Verfahren zur Verwendung eines Gerätegehäuses (14) nach einem der Ansprüche 1 bis 8,
wobei zum Erhalt des Innengehäuses (16) die Innengehäuseoberschale (22) mit der Innengehäuseunterschale (20) verbunden wird,
wobei zumindest ein Kabel (12) in eine von der Innengehäuseunterschale (20) und der Innengehäuseoberschale (22) gebildete Kabeleinführöffnung (30, 34) eingeführt oder in einem Kabelaufnahmeprofil (30) der Innengehäuseunterschale (20) platziert wird,
wobei der Klemmkörper (38) am Innengehäuse (16) angebracht wird und
wobei mittels des Außengehäuses (18) ein reib- und oder formschlüssiger Kontakt zwischen dem Klemmkörper (38) und dem oder jedem Kabel (12) bewirkt wird.

12. Verfahren nach Anspruch 11,
wobei der Klemmkörper (38) am Innengehäuse (16) angebracht wird, indem dieser in den Rahmen (36) der Innengehäuseoberschale (22) eingesetzt wird.
